# NEUE EUROPÄISCHE PATENTSCHRIFT

(11) **EP 0 538 576 B2**
(45) Veröffentlichungstag und Bekanntmachung des Hinweises auf die Entscheidung über den Einspruch: **22.10.1997**
(45) Hinweis auf die Patenterteilung: 12.04.1995
(21) Anmeldenummer: 92114000.0
(22) Anmeldetag: 17.08.1992
(51) Int. Cl.: D21C 11/00, D21C 11/12, D21C 11/06, D21C 3/02

(54) **Verfahren zur Rückgewinnung der Chemikalien der Kochlauge**
Process for recovery of chemicals from the pulping liquor
Procédé pour la récupération des produits chimiques de la liqueur de cuisson

(30) Priorität: 25.10.1991 AT 2129/91
(43) Veröffentlichungstag der Anmeldung: 28.04.1993
(73) Patentinhaber: AUSTRIAN ENERGY & ENVIRONMENT SGP/WAAGNER-BIRO GmbH, A-1210 Wien (AT)
(72) Erfinder: Glasner, Alfred, Dipl.-Ing., A-8162 Passail 237 (AT); Bobik, Michael, Dr., A-8042 Graz (AT)
(74) Vertreter: Wallner, Gerhard, Dipl.-Ing.

(56) Entgegenhaltungen:
- US-A- 3 826 710
- US-A- 4 148 684
- ABSTRACT BULLETIN OF THE INSTITUTE OF PAPER CHEMISTRY Bd. 55, Nr. 7, Januar 1985,APPLETON/US,Seite 831,NAUMOV, A.V. et al"Purification of recovery furnace flue gases from sulfur compounds"
- Karl Fuchs, "Das ASAM-Verfahren", Kraftanlagen Heidelberg, pp. 1 to 11, 1990
- "ASAM-Report", Kraftanlagen (title page and literature page)
- P. Rimpi, "Tampella System for Recycling of Bleaching Chemicals, 1985
- John Campbell Jr. and Dr. Philip E. Schick, "What's the Score on NSSC Recovery?", The Paper Trade Journal, pp. 22 and 23, 1956

## Beschreibung

Die Erfindung betrifft ein Verfahren zur Rückgewinnung der Chemikalien der Kochlauge für den Zellstoffaufschluß, insbesondere nach dem ASAM-Verfahren, bei dem die Ablauge in einem Laugenverbrennungskessel mit flüssigem Schlackenabzug und einer mehrstufigen Abgasreinigung mit Rückgewinnung der Natrium-Schwefelverbindungen verbrannt wird, gemäß Oberbegriff des Anspruchs 1.
Das ASAM(Alkalisches Sulfit Anthrachinon Methanol)-Verfahren verbindet den alkalischen Sulfitaufschluß auf Natriumbasis unter Verwendung von Anthrachinon mit dem Organosolv-Aufschluß, wobei Zellstoffe mit einem Gütewert ähnlich jenem des Sulfataufschlusses und einem Weißegrad nach der Kochung ähnlich jenem des Sulfitaufschlusses, also mit hohem Gütegrad, erzeugt werden.
Die EP-A1 0090969 offenbart einen Zellstoffaufschluß auf Methanolbasis und die DE-A1 31 42 787 mit einer Natriumneutralsulfitkochlösung. In beiden Verfahren wird auf den flüssigen Schlackenaufschluß nicht eingegangen. Die WO-A1 79/00899 offenbart einen flüssigen Schlackenaufschluß beinhaltend Na₂CO₃ und Natriumschwefelverbindungen, wobei zur NaOH-Gewinnung CaO verwendet wird, wobei nicht nur CaCO₃, sondern auch CaSO₃ entsteht, so daß wertvolles SO₂ verloren geht. Es ist daher bei unserer Erfindung wesentlich, das flüssige Na₂CO₃ von Schwefelverbindungen zu reinigen und dieselben unter Bildung von SO₂ zu verbrennen und das benötigte Na₂SO₃ über die Rauchgasreinigung zu erhalten.

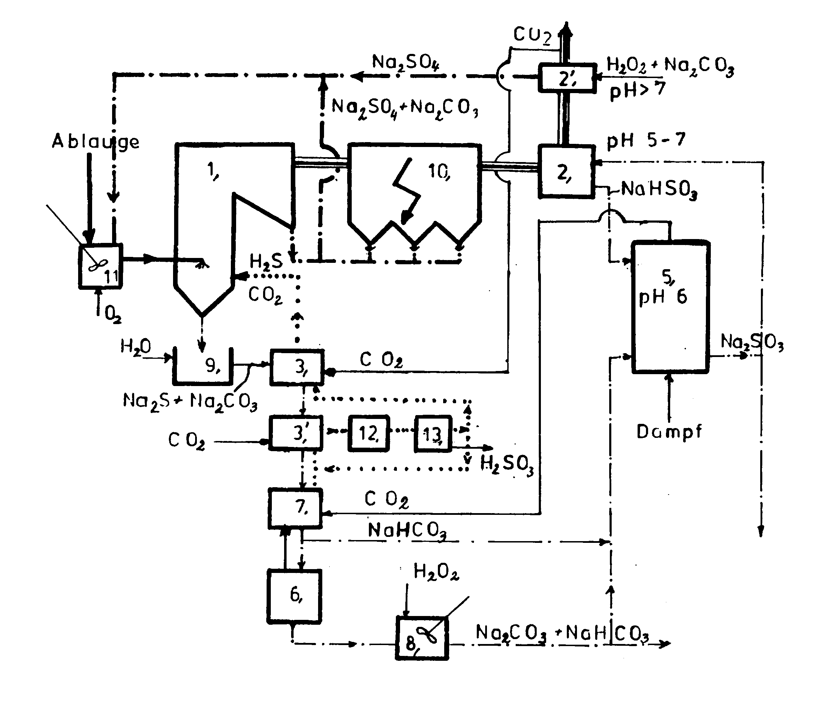

Es ist bekannt, bei Laugen auf Mg-Basis die Laugenchemikalien aus den Abgasen und dem Verbrennungsstaub rückzugewinnen. Bei Laugen auf Na-Basis ist infolge der hohen Schwefelverluste die Rückgewinnung nur zum Teil möglich und man hat daher Schwefelverbrennungsanlagen zur Ergänzung des Schwefelverlustes in das Verfahren eingeschlossen. Da die Umweltschutzgesetze den Schwefelgehalt der Abgase begrenzen und auch die Deponierung von Sulfiten und Sulfaten auf Schwierigkeiten stößt, hat es sich die Erfindung zur Aufgabe gestellt, den Chemikalienkreislauf zu schließen und die Na- und S-Verbindungen in für den Zellstoffbetrieb wiederverwertbarer Form zu gewinnen. Besonders schwierig ist die Hintanhaltung der Thiosulfatbildung, insbesondere bei der Sulfitisierung durch die getrennte Gewinnung von Na₂CO₃ und Na₂SO₃ in möglichst reinem Zustand, weil die Thiosulfatbildung die Verwendbarkeit der frischen Lauge einschränkt, so daß ein erhöhter Frischchemikalienbedarf entsteht.
Die Erfindung hat es sich zur Aufgabe gestellt, diesen Schwierigkeiten zu begegnen und mit hohem Wirkungsgrad die Grundstoffe für die Herstellung der Kochlauge und ohne zusätzlichen Chemikalienbedarf zu gewinnen. Diese Aufgabe wird durch die kennzeichnenden Merkmale des Anspruchs 1 gelöst.
Die Erfindung wird in zwei Beispielen erläutert. In einer Waschkolonne mit Siebboden wird entgegen der Schwerkraftrichtung das Gas geführt und die Waschflüssigkeit in Richtung der Schwerkraft, also im Gegenstrom zum Gas, geleitet. Die Waschflüssigkeit ist durch einen Natriumkarbonatzusatz (Soda) alkalisiert. Beim Eintritt in die Kolonne wird der Waschflüssigkeit H₂O₂ entsprechend dem Gehalt an Geruchsstoffen im zu reinigenden Gas zugemischt, wodurch die Geruchsstoffe, beispielsweise H₂S und auch Merkaptan, in Sulfat oxidiert werden und weiter in der Waschflüssigkeit gelöst bleiben.
Dasselbe Verfahren kann auch in einem Naßwäscher wie z.B. Venturiwäscher, durchgeführt werden, indem die Waschflüssigkeit mit dem zu reinigenden Gas in innigen Kontakt gebracht wird, so daß die chemische Oxidation der Geruchsstoffe stattfinden kann.
Die Erfindung ist in der Figur in Form eines Schaltbildes für die Rückgewinnung der ASAM-Lauge geoffenbart.

Die Rückgewinnung der ASAM-Lauge mit der Zusammensetzung (bezogen auf absolute Trockensubstanz Holz) bis 20% Na₂SO₃, bis 5% Na₂CO₃, bis 5% NaOH, Antrachinon bis 0,2 %, Methanol jedoch bis 30% bezogen auf die Flotte erfolgt ähnlich dem Rückgewinnungsverfahren für Natrium-Sulfit-Aufschluß von Zellstoffen. Methanol wird destillativ aus der Ablauge zurückgewonnen, die Aufschlußchemikalien können gegenüber den bekannten Verfahren vorteilhaft nach der erfindungsgemäßen Prozeßführung rückgewonnen werden. Prinzipiell soll die Rückgewinnung so durchgeführt werden, daß alle Chemikalien vollständig in einer für das ASAM-Verfahren verwertbaren Form anfallen und die Verluste klein gehalten werden. Die Emissionen an SO₂, H₂S, Merkaptanen werden auf ein geringstes Maß reduziert.
Im Laugenkessel 1 wird die Ablauge bzw. werden deren organische Substanzen und die in der Chemikalienrückgewinnung unerwünschten schwefelhältigen Produkte verbrannt. Die Abgase enthalten u.a. staubförmiges Natriumsulfat und Natriumkarbonat sowie gasförmiges SO₂ und hauptsächlich CO₂. Der Großteil der Aschebestandteile wird jedoch unter reduzierenden Bedingungen in die Schlacke eingebunden, wobei der Schwefel zu Sulfid reduziert; als Nebenprodukte werden teilweise Sulfat, Sulfit und Thiosulfat gebildet und schmelzflüssig ausgetragen. Das in der Lauge enthaltene Sulfit spaltet in der Brennkammer zu SO₄ und H₂S, der Schwefelwasserstoff verbrennt mit dem Überschuß O₂ zu SO₂ und H₂O. Der Gehalt an SO₂ im Rauchgas wird wesentlich von der Sulfitkonzentration beeinflußt, durch Voroxidation der Dünnlauge kann dieser Anteil reduziert werden.
Im Elektrofilter 10 wird der Staub aus dem Abgas des Laugenkessels 1 abgeschieden und dem Laugenbehälter 11, eventuell zusammen mit der Na₂SO₄-hältigen Waschflüssigkeit, aus dem basischen Wäscher 2' zugeführt und mit der Ablauge vermischt. Die Dünnlauge wird nun belüftet, um die Sulfite zumindest zum Teil in Sulfate zu verwandeln, und anschließend vor der Verbrennung eingedickt. Durch diese Maßnahme wird der H₂S-Gehalt im Verbrennungsabgas des Laugenkessels gesenkt und die Sulfateinbindung in der Schlacke verstärkt. Die Belüftung erfolgt mit Einblasung von Luft oder Sauerstoff oder auch durch Zugabe von Sauerstoff abgebenden Mitteln. Die entstehende Abluft wird der Verbrennungsluft des Laugenverbrennungskessels zugemischt.

In der sauren Waschstufe 2 wird in einer oder mehreren Stufen bei einem pH-Wert 5 - 7 durch Waschung mit Na₂SO₃ (Natriumsulfit) NaHSO₃ - (Natriumbisulfit) ausgewaschen (Na₂SO₃ + SO₂ + H₂O → 2NaHSO₃). In der basischen Waschstufe 2'wird bei einem pH-Wert 9 - 10 das Abgas mit H₂O₂ und Na₂CO₃ gewaschen, wobei H₂S oxidiert wird (H₂S + 4H₂O₂ + Na₂CO₃ → Na₂SO₄ + CO₂ + 5H₂O).
Im Schmelzlösebehälter 9 wird die erstarrende Schmelze aus dem Laugenkessel 1 in Wasser gelöst und die Lösung der Vorkarbonatisierungsstufe 3 zugeführt. Die erforderliche Konzentration wird eingestellt. Es entsteht eine Salzlösung aus Na₂S, Na₂CO₃, Na₂SO₄, Na₂SO₃, Na₂S₂O₃, Merkaptanen.
In der Vorkarbonatisierungsstufe 3 wird durch CO₂-Zufuhr aus dem gereinigten Abgas nach der basischen Waschstufe 2 durch Waschung bei einem pH-Wert < 10 mit einer Na₂S + Na₂CO₃ Lösung (bzw. Suspension) ein kleiner Teil des H₂S freigesetzt, welches im Laugenkessel 1 verbrannt wird.
Um einen störungsfreien Betrieb zu erreichen wird eine Fällung (Kristallisation) von Bikarbonaten aus der Lösung durch die Temperatureinstellung in den nachfolgenden Karbonatisierungsstufen unterdrückt.
In der Karbonatisierungsstufe 3' wird durch CO₂-Zufuhr aus der Kaustifizierungsanlage (nicht dargestellt) weiteres Na₂S aus der von der Karbonatisierungsstufe 3 ablaufender Lösung in H₂S und Na₂CO₃ bzw. NaHCO₃ umgewandelt sowie in den Strippbehälter 7 geführt. Das H₂S wird in einer Verbrennungsstufe 12, welche in vorteilhafter Weise als Muffei ausgebildet ist, verbrannt und zu SO₂ umgesetzt, welches in einer Waschstufe 13 ausgewaschen bzw. als Sulfit gewonnen wird. Das gewaschene Gas, welches hauptsächlich aus CO₂ besteht, wird in die Karbonatisierung zurückgeführt, um weiteres H₂S aufzunehmen und nach Verlassen der Karbonatisierung dem Laugenkessel 1 zur Verbrennung zugeführt.

In der Bikarbonatspaltung 6 wird aus NaHCO₃ unter Wärmezufuhr (Dampf) Na₂CO₃ erzeugt und CO₂ freigesetzt. Restliches Sulfid, Merkaptan wird durch Waschung mit H₂O₂ im Wäscher 8 oxidiert, so daß das in der Bikarbonatspaltung 6 erzeugte Na₂CO₃ praktisch frei von unoxidierten Schwefelverbindungen ist. Ein Teilstrom der Natriumkarbonate wird der nicht dargestellten Kaustifizierungsanlage und ein anderer Teilstrom der Sulfitisierung 5 zugeführt. In der nicht dargestellten Kaustifizierung wird aus Na₂CO₃ und Ca(OH)₂ NaOH sowie konzentriertes CO₂ für die Karbonatisierung 3' gewonnen.
In der Sulfitisierung 5 wird aus NaHCO₃ bzw. Na₂CO₃ und NaHSO₃ Na₂SO₃ erzeugt, wobei das entstehende relativ konzentrierte CO₂-Gas in den Strippbehälter 7 geleitet wird. Im Strippbehälter 7 wird das restliche H₂S zum Großteil abgetrennt. Die Umsetzung kann unter Druck erfolgen, mit dem Vorteil einer vollständigeren Reaktion durch stärkere pH-Absenkung. Die erforderlichen Gasmengen sind klein, die Erzielung der erforderlichen Stoffaustauschfläche kann durch wiederholtes Ansaugen des Reaktionsgases erfolgen.
Na₂CO₃, Na₂SO₃ und NaOH sind die wesentlichen Frischlaugenchemikalien, die somit aus der Ablauge rückgewonnen werden. Benötigtes Methanol wird aus der Lauge vor ihrer Verbrennung über ein Destillationsverfahren gewonnen.

Folgende Punkte erfordern eine spezielle Verfahrensführung:
1) Der hohe SO₂-Gehalt im Abgas des Laugenkessels (1) erfordert eine Rauchgaswäsche mit eta> 99%. So kann die Verbrennung des restlichen Schwefelwasserstoffes direkt im Laugenkessel bzw. bei hohen Konzentrationen in einer vorgeschalteten Verbrennungsmuffel durchgeführt werden. Die Emissionen an H₂S werden durch eine nachgeschaltete basische oxidierende Waschstufe 2' mit H₂O₂ und Na₂CO₃ reduziert;sie können aber auch zusätzlich durch eine Sauerstoffbehandlung der Dünnlauge vor ihrer Eindickung und anschließenden Verbrennung zur Erhöhung des Sulfatanteils auf Kosten des Sulfitanteils und damit Erhöhung der Schwefeleinbindung in die Schlacke und Reduzierung des SO₂-Gehaltes im Abgas begegnet werden.
2) Da die anfallende Sodalösung bei Nadelhölzern in freies Alkali übergeführt werden muß, ist eine Kaustifizierung erforderlich. Es muß daher das benötigte Na₂CO₃ einen niedrigen Hydrogenkarbonatanteil aufweisen und in einem Teilstrom abgezogen werden. Eine Mischung Na₂SO₃ und Na₂CO₃ muß in der Kaustifizierung weitgehend vermieden werden, da bei der Kaustifizerung der Karbonate SO₃" als CaSO₃ gefällt wird und somit verloren gehen würde.
3) Die Bildung von Natriumthiosulfat durch die Reaktion von Na₂S + SO₂ + Na₂SO₃ → 3Na₂S₂O₃ muß klein gehalten werden. Die Reaktion ist besonders im alkalischen Milieu heftig, wenn Sulfid mit SO₂ in Kontakt kommen kann. Es wird daher eine saure Waschstufe 2 zur SO₂-Abscheidung eingesetzt und erst nachher in einer basischen Waschstufe 2' bei SO₂-Mangel das H₂S abgebunden.
4) Das Natrium-Schwefel-Verhältnis von ca. 2:1 erlaubt eine Verfahrensführung, bei der das anfallende CO₂ nicht rückgeführt werden muß. Konzentriertes CO₂ fällt bei der Sulfitisierung 5, bei der Bikarbonatspaltung 6 und bei der Kaustifizierung (nicht dargestellt) an.
5) In der Vorkarbonatisierung 3, 3' wird ein weitgehender Umsatz des Na₂S zu Bikarbonat erreicht (>80-90%), wodurch ein teilweises Austreiben des Schwefelwasserstoffes durch Strippung mit CO₂ bzw. Abgas aus dem Strippbehälter 7 erfolgt. Dieser in verdünnter Konzentration vorliegende Schwefelwasserstoff aus der Karbonatisierung 3 wird mit dem restlichen CO₂ dem Laugenkessel 1 zugeführt.
6) Die vollständige Strippung des H₂S erfolgt im Reaktor 7 durch weitere pH-Wertabsenkung durch Sättigung der Na₂S-hältigen Flüssigkeit mit CO₂ (conc) aus der Sulfitisierung 5 und aus der Bikarbonatspaltung 6. Es fallen hier große CO₂-Mengen in hoher Konzentration an, welche für den Prozeß genutzt werden können.
7) Wird das gesamte Na₂HCO₃ über die Bikarbonatspaltung 6 geführt, kann durch das Austreiben des CO₂ der Restsulfidgehalt sehr weit abgesenkt werden. Eine Oxidationsstufe 8, die als Wäscher mit H₂O₂ ausgebildet ist für das verbleibende Sulfid und Merkaptane, ermöglicht eine Vermeidung von Thiosulfatbildung und Gasbildung in der Waschstufe 2, 2'. Die Entnahme des Teilstromes von NaHCO₃-hältiger Lösung für die Sulfitisierung vor der Bikarbonatspaltung 6 erfordert im Gegenssatz dazu einen geringeren Dampfbedarf und fördert die Sulfitisierung 5.
8) Die Rauchgaswäsche 2 aus dem Laugenkessel 1 wird mit einem Teilstrom Na₂SO₃ aus der Sulfitisierung 5 durchgeführt, wobei NaHSO₃ gebildet wird. Dieses Hydrogensulfit spaltet in der Sultifisierung 5 vom Natriumkarbonat CO₂ ab und bildet Na₂SO₃. Eine Bildung von Thiosulfaten aus dem im Kesselabgas enthaltenen H₂S wird durch die saure Fahrweise des Wäschers vermindert, indem H₂S erst in einem nachgeschalteten alkalischen Wäscher 2' absorbiert wird.

## Patentansprüche

1. Verfahren zur Rückgewinnung der Chemikalien der Kochlauge für den Zellstoffaufschluß, insbesondere nach dem ASAM-Verfahren, bei dem die Ablauge in einem Laugenverbrennungskessel mit flüssigem Schlackenabzug und einer mehrstufigen Abgasreinigung mit Rückgewinnung der Natrium-Schwefelverbindungen verbrannt wird und die den Laugenkessel verlassenden Gase zuerst trocken entstaubt und anschließend durch unterschiedliche Waschflüssigkeit, gewaschen werden und die flüssige Schmelze in Wasser gelöst wird, wobei die gelösten Natriumverbindungen, insbesondere das gebildete Na2S durch Karbonatisierung mit einem Teil des gereinigten Abgases, bzw. des im Verfahren anfallenden CO₂, wie zum Beispiel CO₂-hältiges Abgas einer Kaustifizierungsanlage in NaHCO₃ und H₂S umgewandelt werden, **dadurch gekennzeichnet,** daß das freiwerdende H₂S teilweise in die Laugenverbrennung rückgeführt wird und die trocken entstaubten SO₂- und H₂S-hältigen Abgase des Laugenkessels zuerst bei einem ph-Wert 5-7 mit einer Na₂SO₃-Lösung unter Erzeugung von NaHSO₃ und die abströmenden noch geruchsintensiven H₂S- und Merkaptan-hältigen Abgase in einer zweiten Waschstufe mit H₂O₂ bei einem ph-Wert > 7 unter Bildung von Na₂SO₄ gewaschen werden, welches mit den trocken abgeschiedenen Stäuben mit der zu verbrennenden Lauge gemischt wird und dem Laugenkessel zugeführt wird.

2. Verfahren nach Anspruch 1, **dadurch gekennzeichnet,** daß die NaHSO₃-Lösung von der ersten Abgaswaschstufe mit den karbonisierten Natriumverbindungen bei ph-Wert 6 gemischt werden, wobei das entstehende NaSO₃ für die Lauge und der Waschflüssigkeit der ersten Waschstufe verwendet wird.

3. Verfahren nach Anspruch 1, **dadurch gekennzeichnet,** daß die gelösten Natriumverbindungen aus der Schmelze in mehreren Stufen durch CO₂-hältige Gase unter Freisetzung von H₂S gestrippt werden, wobei die letzte Strippstufe das CO₂ von einer an die Strippeinrichtung angeschlossenen Bikarbonatspaltung erhält, so daß das Endprodukt nur geringe NaH-CO₃- und H₂S-Verunreinigungen enthaltendes Na₂CO₃ ist und für die Kaustifizierung zur Gewinnung von NaOH geeignet ist.

4. Verfahren nach Anspruch 3, **dadurch gekennzeichnet,** daß durch Kaustifizierung des Na₂CO₃ und NaHCO₃-Gemisches der für das ASAM-Verfahren benötigte Anteil an NaOH eingestellt wird.

5. Verfahren nach Anspruch 3, **dadurch gekennzeichnet,** daß das Na₂CO₃, NaHCO₃, NaHS und H₂S-Gemisch durch Oxidation mit H₂O₂ in einem Wäscher von den reduzierten S-Verbindungen befreit wird.

6. Verfahren nach Anspruch 1, **dadurch gekennzeichnet,** daß die zu verbrennende Lauge vor ihrer Eindickung und ihrer anschließenden Verbrennung zur Erhöhung des Sulfatgehaltes belüftet bzw. mit Sauerstoff-hältigen oder -abgebenden Stoffen behandelt wird.

## Claims

1. Process for recovery of chemicals from the pulping liquor for pulp digestion, especially according to the ASAM-process, where the waste liquor is burned in a liquor combustion boiler provided with liquid slag discharge and multi-stage flue-gas cleaning with recovery of the sodium sulphur compounds being characterised by the fact that the particulates will be first removed from the gases leaving the liquor boiler being then scrubbed by means of different scrubbing liquids and that the liquid smelt is solved in water, where the dissolved sodium compounds, especially the Na₂S being formed, are converted into NaHCO₃ and H₂S by carbonisation with a share of the cleaned waste gas and/or of the CO₂ resulting from the process, such as waste gas containing CO₂ of a causticizing plant, being characterised by the fact that the released H₂S is partially returned to the liquor combustion and by the fact that the waste gases containing SO₂ and H₂O of the liquor boiler separated from dust by a dry process will be scrubbed first at a pH-value of 5 - 7 using a Na₂SO₃ solution producing NaHSO_{3,} and that the discharged waste gases containing H₂S and mercaptan which are still highly odorous will be scrubbed in a second scrubbing stage with H₂O₂ at a pH-value of > 7 while forming Na₂SO₄, which is mixed with the dust separated by a dry process and with the liquor to be burned and returned to the liquor boiler.

2. Process according to Claim 1 being characterised by the fact that the NaHSO₃ solution from the first waste gas scrubbing stage will be mixed with the carbonised sodium compounds at a pH-value of 6, where the resulting Na₂SO₃ will be used for the liquor and the scrubbing liquid of the first scrubbing stage.

3. Process according to Claim being characterised by the fact that the dissolved sodium compounds from the smelt will be stripped in several stages by gases containing CO₂ under release of H₂S, where the last stripping stage will be provided with CO₂ from a stripping unit being connected to the bicarbonate splitting so that the final product is Na₂CO₃ containing only little NaHCO₃ and H₂S contaminants and thus being suitable for causticizing to produce NaOH.

4. Process according to Claim 3 being characterised by the fact that by causticizing the Na₂CO₃ and NaHCO₃ mixture the share of NaOH required for the ASAM-process will be regulated.

5. Process according to Claim 3 being characterised by the fact that the Na₂CO₃, NaHCO₃, NaHS, and H₂S mixture is liberated from the reduced S-compounds by oxidation with H₂O₂ in a scrubber.

6. Process according to Claim 1 being characterised by the fact that the liquor to be burned will be aerated and/or treated with substances containing or releasing oxygen prior to its thickening and subsequent burning for increasing the sulphate content.

## Revendications

1. Procédé pour la récupération des produits chimiques de la liqueur de cuisson pour la digestion des pâtes chimiques, en particulier selon le procédé ASAM, où la lessive usée est brûlée dans une chaudière de combustion de la lessive avec retrait des scories liquides et une épuration des gaz en plusieurs étages avec récupération des composés de sodium-soufre, où les gaz quittant la chaudière sont d'abord dépoussiérés à sec et ensuite sont lavés par différents liquides de lavage, et la masse fondue liquide est dissoute dans l'eau et les composés dissous de sodium, en particulier Na₂S qui se forme, sont convertis par carbonatation avec une partie des gaz d'échappement épurés ou, respectivement, du CO₂ qui se produit dans le procédé comme, par exemple, le gaz contenant CO₂ à l'échappement d'un étage de caustification, en NaHCO₃ et H₂S, et **caractérisé en ce que** H₂S libéré est reconduit partiellement à la combustion de la lessive, et que les gaz d'échappement de la chaudière dépoussiérés à sec,contenant SO₂ et H₂S, sont lavés d'abord à un pH de 5-7, avec une solution de Na₂SO₃ et production de NaHSO₃ et les gaz d'échappement qui s'en écoulent, et qui sont encore forts en odeur et contiennent H₂S et des mercaptans, sont lavés dans un second étage de lavage avec H₂O₂ à pH > 7 avec formation de Na₂SO₄, lequel est mélangé aux poussières séparées à sec et à la lessive à brûler et retourné à la chaudière de combustion de la lessive.

2. Procédé selon la revendication 1 **caractérisé en ce que** la solution de NaHSO₃ du premier étage de levage das gaz d'échappement est mélangée aux composés carbones de sodium à un pH de 6 et Na₂SO₃ qui en résulte est utilisé pour la lessive et le liquide de lavage du premier étage de lavage.

3. Procédé selon la revendication 1, **caractérisé en ce que** les composés dissous de sodium provenant de la masse fondue sont extraits en plusieurs étages par des gaz contenant CO₂ avec libération de H₂S et le dernier étage d'extraction obtient CO₂ d'une dissociation du bicarbonate qui est raccordée à l'installation d'extraction de façon que le produit final soit Na₂SO₃ ne contenant que peu d'impuretés de NaHCO₃ et H₂S et qu'il soit adapté à la caustification pour la récupération de NaOH.

4. Procédé selon la revendication 3, **caractérisé en ce que,** par caustification du mélange de Na₂CO₃ et NaHCO₃, on produit la proportion de NaOH qui est nécessaire pour le procédé ASAM.

5. Procédé selon la revendication 3, **caractérisé en ce que** le mélange de Na₂CO₃, NaHCO₃, NaHS et H₂S est libéré par oxydation avec H₂O₂ dans un laveur, des composés réduits de S.

6. Procédé selon la revendication 1, **caractérisé en ce que** la lessive à brûler est aérée avant sa concentration et sa combustion subséquent pour l'augmentation de la teneur en sulfate, ou respectivement, est traitée avec des matières contenant ou donnant de l'oxygène.
